# FASCICULE DE BREVET EUROPEEN

(11) **EP 2 380 782 B1**
(45) Date de publication et mention de la délivrance du brevet: **18.09.2013**
(21) Numéro de dépôt: 11305476.1
(22) Date de dépôt: 21.04.2011
(51) Int. Cl.: B60R 19/24, B62D 21/15

(54) **Ensemble structurel avant de véhicule automobile et prolonges de berceau associées**
Strukturell Fahrzeugzusammensetzung vorne mit Motorträgerverlängerungen
Front structural assembly for a vehicle and related engine mounting extensions

(30) Priorité: 26.04.2010 FR 1053171
(43) Date de publication de la demande: 26.10.2011
(73) Titulaire: Faurecia Bloc Avant, 92000 Nanterre (FR)
(72) Inventeur: Gonin, Vincent, 37540 Saint Cyr sur Loire (FR); Dufee, Julien, 90340 Novillard (FR); Droz-Bartholet, Laurent, 25400 Audincourt (FR); Buron, Marie-Pierre, 25260 Montenois (FR)
(74) Mandataire: Domenego, Bertrand

(56) Documents cités:
- FR-A1- 2 936 469
- US-A- 3 564 688

## Description

La présente invention concerne un ensemble structurel avant de véhicule automobile, du type comprenant une poutre pare-chocs transversale de voie basse et des prolonges longitudinales pour relier la poutre pare-chocs à la caisse du véhicule automobile, les prolonges comportant chacune :
- un corps allongé comportant une face extérieure ;
- des nervures entrecroisées s'étendant sur la face extérieure du corps, les nervures étant venues de matière avec le corps ; et
- au moins une embase de fixation, située à une extrémité du corps, l'embase de fixation étant venue de matière avec le corps.

Dans le cadre de la sécurité passive qui concerne l'ensemble des moyens et des actions mises en oeuvre pour réduire les conséquences d'un accident, les constructeurs automobiles doivent faire face à trois préoccupations majeures :
- assurer la protection des occupants du véhicule, notamment en cas de choc frontal ;
- maîtriser les coûts de réparation du véhicule, notamment suite à un choc à faible vitesse ; et
- limiter l'agressivité du véhicule vis-à-vis des autres usagers de la route, et notamment des piétons.

Pour cela, les nouveaux véhicules automobiles disposent d'une structure avant, comprenant notamment des longerons principaux porteurs d'une traverse de pare-chocs (« voie haute »). Cette voie haute est doublée d'un ensemble structurel avant comprenant un berceau supportant la suspension avant du véhicule et une poutre transversale de pare-chocs, située à une hauteur inférieure à celle de la traverse de pare-chocs et reliée à chacune de ses extrémités au berceau par une prolonge (« voie basse »).

Un tel ensemble structurel absorbe une partie de l'énergie des chocs frontaux et permet une meilleure répartition de l'énergie de ces chocs au niveau de la caisse du véhicule ; il contribue ainsi à une meilleure réparabilité du véhicule. En outre, la poutre transversale permet, en cas de choc frontal avec un piéton, de réduire les risques de blessure grave au niveau des jambes du piéton.

EP 1 955 930 décrit un tel ensemble structurel avant, comprenant des prolonges en matériau composite.

Cependant, cet ensemble structurel avant présente un certain nombre d'inconvénients liés à son mode de réalisation, pénalisant notamment le comportement lors de chocs à grande vitesse. En effet, ce profil n'est pas idéal pour concilier une bonne tenue en compression des prolonges avec des épaisseurs de parois et une masse acceptables.

A ce sujet on connait le document FR-A-2936469, dont le contenu est pris à base des charactéristiques du préambule de la revendication 1.

Un objet de l'invention est donc de proposer un meilleur compromis grâce à un ensemble structurel avant léger et présentant une tenue en compression satisfaisante.

A cet effet, l'invention a pour objet un ensemble structurel avant de véhicule automobile du type précité, caractérisé en ce que le corps de chaque prolonge est tubulaire et comporte au moins un évidement traversant le corps et débouchant à ses extrémités longitudinales.

L'ensemble structurel avant selon l'invention peut comprendre l'une ou plusieurs des caractéristiques suivantes, prise(s) isolément ou selon toute(s) combinaison(s) techniquement possible(s) :
- au moins une nervure s'étend longitudinalement le long du corps ;
- au moins une nervure s'étend transversalement ;
- les prolonges sont en matériau plastique ou composite ;
- chaque prolonge est monobloc ;
- le corps de chaque prolonge est formé de deux tronçons tubulaires tronconiques convergeant l'un vers l'autre ;
- chaque prolonge est constituée de deux demi-coques allongées de forme générale semi-cylindrique ;
- les demi-coques sont liées continument l'une à l'autre par un pont de matière faisant charnière ;
- la ou chaque embase est nervurée ; et
- il comprend un berceau, notamment un berceau moteur, destiné à être fixé sur la caisse d'un véhicule automobile, les prolonges définissant des prolonges de berceau.

L'invention a également pour objet un procédé de fabrication d'une prolonge de berceau pour une telle structure avant de véhicule automobile, caractérisé en ce qu'un matériau composite ou plastique est injecté dans un moule de façon à former la prolonge.

Le procédé selon l'invention peut comprendre l'une ou plusieurs des caractéristiques suivantes, prise(s) isolément ou selon toute(s) combinaison(s) techniquement possible(s) :
- des noyaux, notamment tronconiques, sont introduits dans le moule avant injection du matériau constitutif de la prolonge, de façon à former l'évidement central de la prolonge ; et
- un fluide liquide est injecté dans le moule pendant l'injection du matériau constitutif de la prolonge, de façon à former le ou chaque évidement de la prolonge.

La présente invention sera mieux comprise à la lecture de la description qui va suivre, donnée uniquement à titre d'exemple, et faite en se référant aux dessins annexés, sur lesquels :
- la Figure 1 représente une vue en perspective de trois-quarts avant d'un ensemble structurel avant de véhicule automobile selon l'invention ;
- la Figure 2 représente une vue en perspective d'une prolonge de l'ensemble structurel avant de la Figure 1 ;
- la Figure 3 représente une vue de face d'une prolonge selon une variante de la prolonge de la Figure 2 ;
- la Figure 4 représente une vue en coupe longitudinale d'une prolonge selon une autre variante de la prolonge de la Figure 2 ;
- la Figure 5 représente une vue éclatée en perspective d'une prolonge selon deuxième mode de réalisation ;
- la Figure 6 représente une vue en coupe transversale d'une prolonge selon une variante de la prolonge de la Figure 5 ;
- la Figure 7 représente une vue en coupe longitudinale de la prolonge de la Figure 4, lors de sa fabrication.

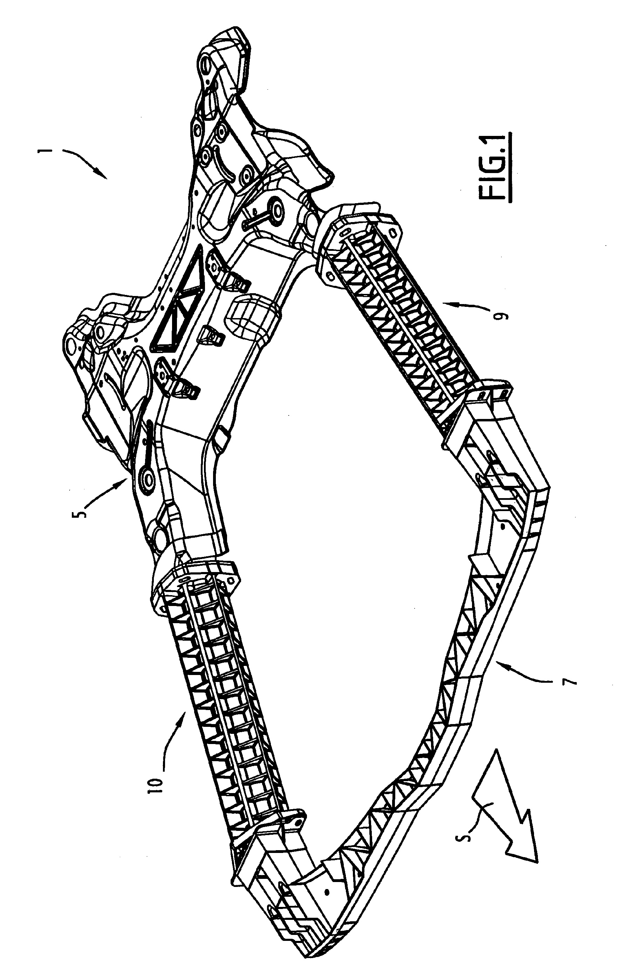

Dans tout ce qui suit, les termes, « gauche », « droite » s'entendent par rapport aux orientations habituelles et au sens de marche normal d'un véhicule automobile, illustré par la flèche S sur la Figure 1.

L'ensemble structurel avant 1 de véhicule automobile représenté sur la Figure 1 comporte un berceau 5 de caisse automobile, une poutre transversale 7 et des prolonges 9, 10.

Le berceau 5 est par exemple un berceau moteur. Il s'étend sensiblement horizontalement, sous les longerons principaux de la caisse du véhicule. Il supporte au moins en partie les suspensions des roues avant du véhicule, ainsi que le moteur. Il sert également de fixation aux bras des suspensions et/ou à la barre antiroulis.

La poutre transversale 7 est une poutre de pare-chocs de voie basse. Elle s'étend sur la majorité de la largeur du véhicule. Elle est disposée en-dessous de la traverse de pare-chocs principale supportée à l'extrémité des longerons principaux, à une hauteur par rapport au sol inférieure à la hauteur des genoux d'un piéton de taille moyenne.

Les prolonges 9, 10 sont en matériau composite (matière plastique renforcée de fibres) ou en matière plastique et relient les extrémités droite et gauche de la poutre 7 à l'élément 5.

Les prolonges 9, 10 sont indépendantes l'une de l'autre. En variante, elles sont venues de matière avec une plaque de carénage s'étendant sensiblement horizontalement et constituent, avec cette plaque, un carénage structurel. De préférence, la plaque de carénage comporte alors des dispositifs d'accès à la mécanique du véhicule, tels que des trappes.

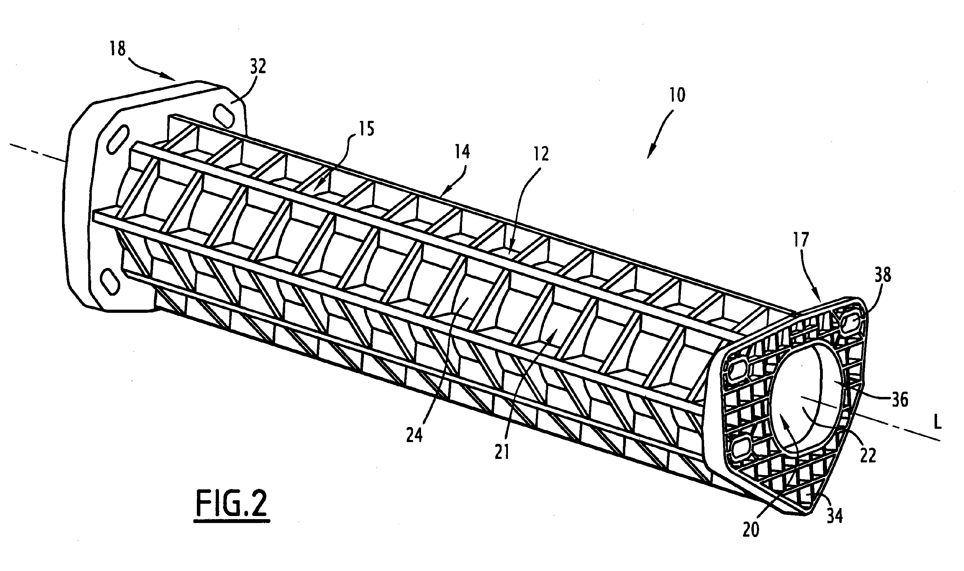

Les prolonges 9, 10 sont analogues et symétriques par rapport à un plan longitudinal vertical médian du véhicule. Seule la prolonge 10 droite (à gauche sur la Figure 1) va être décrite plus en détail, en référence à la Figure 2.

La prolonge 10 est monobloc. Elle comporte un corps 12 tubulaire, allongé suivant une direction d'extension L proche de l'axe longitudinal du véhicule, un ensemble de nervures 14, 15 et des embases 17, 18 de fixation.

Le corps 12 a une section droite sensiblement constante sur toute sa longueur. Il comporte un unique évidement central 20 et une paroi 21, ladite paroi 21 comportant une face intérieure 22 et une face extérieure 24.

L'évidement central 20 s'étend longitudinalement et traverse le corps 12 suivant la direction d'extension L. L'évidement central 20 débouche aux extrémités du corps 12.

La paroi 21 est d'épaisseur sensiblement égale en tout point.

Les nervures 14, 15 s'étendent sur la face extérieure 24 de la paroi 21 du corps 12. Elles sont venues de matière avec le corps 12. Elles présentent une géométrie apte à s'opposer au flambement de la prolonge suivant son axe longitudinal. Dans le cas présenté, elles sont par exemple entrecroisées. Des nervures longitudinales 14, destinées à accroitre l'inertie du profil, s'étendent longitudinalement le long du corps 12. Des nervures transversales 15, destinées à stabiliser les nervures longitudinales 15 durant leur déformation, s'étendent transversalement.

Chaque embase 17, 18 est rigide et venue de matière avec le corps 12. Chaque embase 17, 18 comporte une face interne 32 orientée vers le corps 12, une face externe 34 orientée à l'opposée du corps 12, un orifice 36 traversant et des moyens de fixation 38 au berceau 5 ou à la poutre 7.

La face externe 34 de chaque embase 17, 18 est nervurée.

L'orifice 36 de chaque embase 17, 18 débouche d'un côté dans la face externe 34 et de l'autre côté dans la face interne 32, à l'intérieur de l'évidement 20.

Les moyens de fixation 38 de chaque embase 17, 18 sont par exemple des ouvertures traversantes propres au passage de rivets ou de vis de fixation.

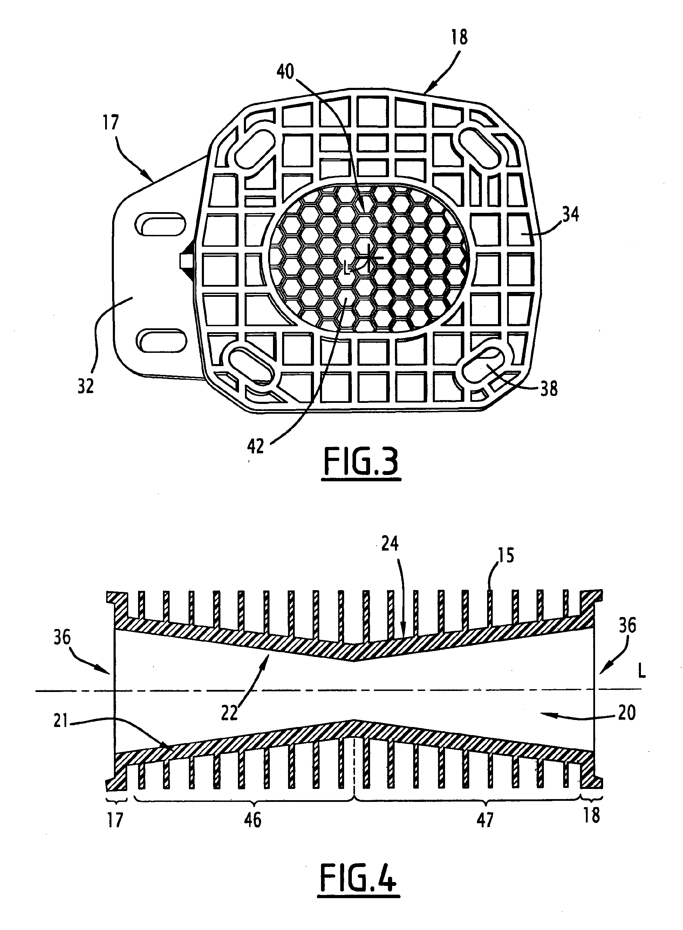

La variante présentée sur la Figure 3 diffère de celle de la Figure 2 en ce que l'unique évidement central 20 est remplacé par une structure interne de renfort 40 alvéolaire, comportant une multitude d'évidements ou veines 42 s'étendant longitudinalement suivant la direction d'extension L et traversant le corps 12. La structure interne 40 est rapportée dans le logement, par exemple sous la forme d'un insert en nid d'abeilles, ou est venue de matière avec le corps 12.

La variante présentée sur la Figure 4, diffère de celle de la Figure 2 en ce que le corps 12 n'a pas une section droite constante, mais est formé de deux tronçons tubulaires tronconiques 46, 47 convergeant l'un vers l'autre. Les extrémités les plus larges de ces tronçons tubulaires sont opposées et forment les extrémités du corps 12. Les nervures, de hauteur croissante à mesure que proches du milieu du corps 12, s'étendent radialement entre la paroi 21 et une enveloppe externe cylindrique.

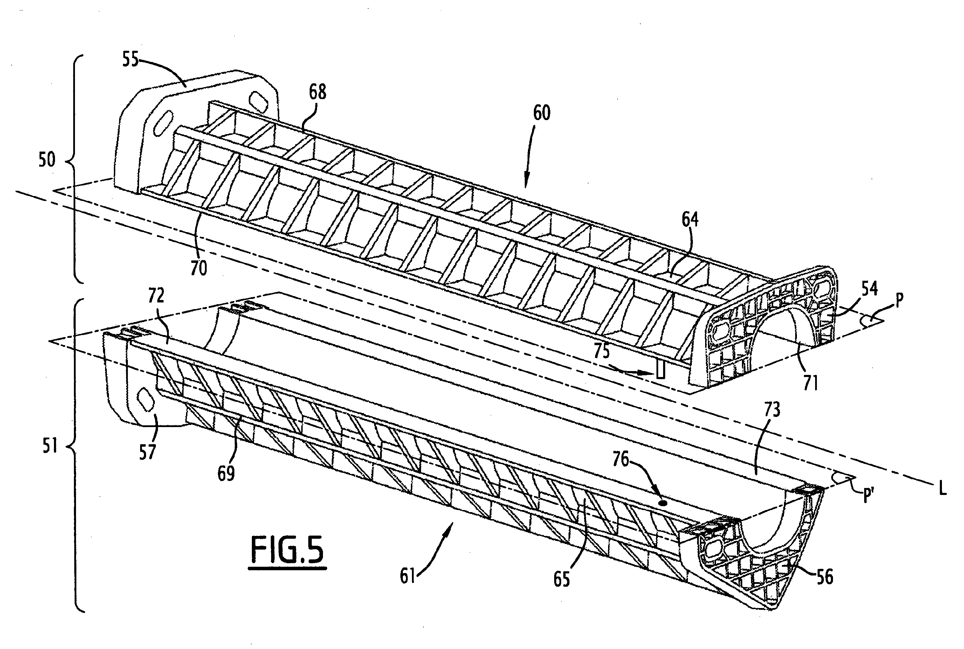

Un deuxième mode de réalisation de la prolonge 10 est présenté sur la Figure 5. La prolonge 10 n'est alors pas constituée d'un ensemble monobloc, mais de deux demi-coques soudées, par exemple par friction ou par ultrasons, ou adhérisées : une première demi-coque 50 et une deuxième demi-coque 51. Chaque demi-coque 50, 51 comporte deux demi-embases, respectivement 54, 55 et 56, 57 un demi-cylindre 60, 61 creux allongé comportant une face extérieure 64, 65, des nervures 68, 69 s'étendant sur la face extérieure 64, 65 du demi-cylindre 60, 61 et deux rebords allongés respectivement 70, 71 et 72, 73. De préférence, chaque demi-coque 50, 51 comporte également au moins un élément 75, 76 de positionnement relatif.

Les rebords allongés 70, 71 s'étendent longitudinalement le long du demi-cylindre 60. Ils sont coplanaires, situés dans un même plan P. Toute la première demi-coque 50 s'étend d'un seul côté du plan P.

Les rebords allongés 72, 73 s'étendent longitudinalement le long du demi-cylindre 61. Ils sont coplanaires, situés dans un même plan P'. Toute la deuxième demi-coque 51 s'étend d'un seul côté du plan P'.

Chaque rebord allongé 70, 71, 72, 73 est plan et présente un profil transversal rectiligne, sans créneau.

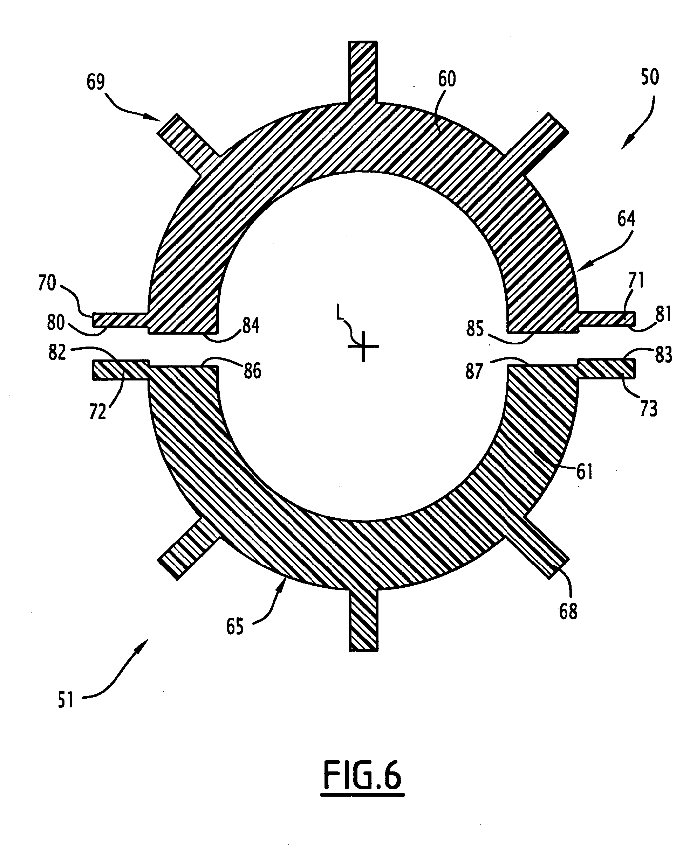

La variante présentée sur la Figure 6 diffère de celle de la Figure 5 en ce que chaque rebord allongé 70, 71, 72, 73 présente un profil transversal crénelé. Chaque rebord allongé 70, 71, 72, 73 comporte au moins deux paliers, un palier extérieur respectivement 80, 81, 82, 83 et un palier intérieur respectivement 84, 85, 86, 87, à des hauteurs différentes, séparés par un décrochement. Les profils des rebords allongés 70 et 71 d'une part, 72 et 73 d'autre part sont symétriques par rapport à un plan longitudinal perpendiculaire au plan P, respectivement perpendiculaire au plan P'. Les rebords allongés 70, 71 de la première demi-coque 50 ont une forme complémentaire de celle des rebords allongés 72, 73 de la deuxième demi-coque 51.

Par exemple, les paliers extérieurs 80, 81 des rebords allongés 70, 71 de la première demi-coque 50 sont tous les deux à une hauteur inférieure à celle des paliers intérieurs 84, 85, et les paliers extérieurs 82, 83 des rebords allongés 72, 73 de la deuxième demi-coque 51 sont tous les deux à une hauteur supérieure à celle des paliers intérieurs 86, 87, les deltas de hauteur entre les paliers extérieurs 80, 81, 82, 83 et les paliers intérieurs 84, 84, 86, 87 étant à chaque fois les mêmes.

Lorsque les demi-coques 50, 51 sont en contact le long de leurs rebords allongés 70, 71, 72, 73, elles forment ensemble une prolonge semblable à la prolonge de la Figure 2 : les demi-embases 54, 56 d'une part, 55, 57 d'autre part, forment les embases 17, 18, les deux demi-cylindres 60, 61 forment le corps 12 et les rebords allongés 70, 72 d'une part, 71, 73 d'autre part, forment des nervures longitudinales.

En option, les demi-coques 50, 51 sont liées par un pont de matière souple le long de l'un 70, 72 de leurs rebords allongés 70, 71, 72, 73. Ce pont de matière est venu de matière avec chacune des demi-coques 50, 51.

Dans le cas où les prolonges 9, 10 font partie d'un carénage structurel, seule l'une des demi-coques 50, 51 est venue de matière avec la plaque de carénage.

Nous allons maintenant décrire le procédé de fabrication de la prolonge 10.

Selon un premier mode de réalisation, la prolonge est formée dans un unique moule. Ce moule comporte une paroi cylindrique interne dans laquelle sont ménagées des tranchées, certaines s'étendant longitudinalement le long de la paroi interne et d'autres s'étendant transversalement, des parois verticales fermant le moule aux extrémités de la paroi cylindrique. Le moule comporte également une buse d'injection de matériau plastique ou composite et une buse d'injection de fluide, toutes deux ménagées dans l'une des parois verticales.

Un matériau composite ou plastique est injecté dans le moule par la buse d'injection de matériau plastique ou composite. Puis un fluide sous pression, de préférence un liquide, est injecté à son tour par la buse d'injection de fluide. Ce fluide forme une bulle dans le matériau préalablement injecté et compacte ce dernier contre la paroi cylindrique du moule. Cette bulle donne naissance à l'évidement central 20. Après démoulage, on obtient une prolonge semblable à celle de la Figure 2.

En variante, le moule comporte plusieurs buses d'injection de fluide. Le fluide sous pression est alors injecté en plusieurs points d'une des parois verticales. Il forme alors plusieurs bulles dans le matériau composite ou plastiques, bulles qui donnent naissance aux veines 42 représentées sur la Figure 3.

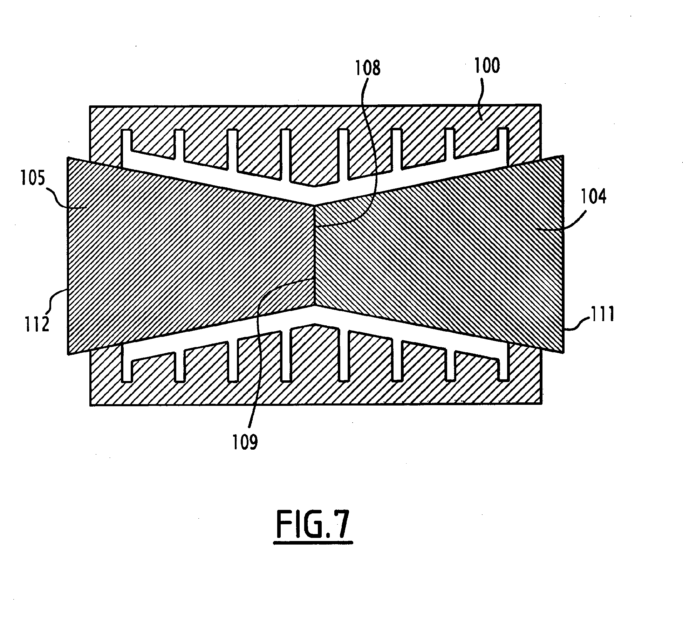

Selon un deuxième mode de réalisation, le matériau composite ou plastique est injecté dans un moule 100 représenté sur la Figure 7. Des noyaux 104, 105 tronconiques sont placés dans le moule 100 de telle sorte qu'ils convergent l'un vers l'autre. Les noyaux 104, 105 sont en contact le long de leurs extrémités 108, 109 de plus petit diamètre. Leurs extrémités 111,112 de plus grand diamètre sortent du moule 100.

Le matériau composite ou plastique injecté dans le moule 100 se réparti dans l'ensemble du moule 100, à l'exception de l'espace occupé par les noyaux 104, 105. Le matériau se réparti autour des noyaux 104, 105.

Une fois le matériau rigidifié, il est démoulé. Les noyaux 104, 105 sont retirés. Cette opération de dénoyautage est simplifiée par la forme tronconique des noyaux 104, 105. On obtient finalement une prolonge 10 semblable à la variante présentée sur la Figure 4.

Selon un troisième mode de réalisation, le matériau composite ou plastique est injecté dans deux moules ayant chacun une forme générale de demi-cylindre creux. Ces injections sont de préférence réalisées séparément. Le matériau est injecté de façon à remplir entièrement chacun des deux moules.

En variante, les moules sont situés parallèlement l'un à l'autre, à proximité l'un de l'autre, de telle façon qu'ils affleurent le long d'un bord. Dans ce cas, l'injection est réalisée simultanément dans les deux moules, de façon à ce que le matériau remplisse entièrement chacun des moules. Lors de cette injection, de la matière flue à travers l'affleurement et forme un pont de matière entre les deux moules.

Une fois le matériau rigidifié, les deux demi-coques 50, 51 ainsi formées sont démoulées. Elles sont ensuite placées l'une en regard de l'autre, de façon à ce que les rebords 70, 72 d'une part, 71, 73 d'autre part, se fassent face. Les éléments 75, 76 de positionnement relatif, ainsi que, éventuellement, le pont de matière, aident au positionnement des demi-coques 50, 51 l'une par rapport à l'autre. Les demi-coques 50, 51 sont enfin collées l'une à l'autre le long de leurs rebords allongés 70, 71, 72, 73. En variante, elles sont soudées, par exemple par friction ou ultrasons.

Même si l'ensemble structurel avant selon l'invention a été décrit comme comportant un berceau sur lequel sont fixées les prolonges, l'invention ne se limite pas à ce seul mode de réalisation. Il est en effet possible de fixer les prolonges à n'importe quel élément d'une caisse de véhicule automobile, sans sortir du cadre de l'invention.

Grâce à l'invention, la tenue en compression des prolonges est améliorée, notamment grâce au corps évidé, qui comprend un unique évidement central ou une pluralité de canaux ou veines parallèles traversant le corps sur toute sa longueur.

De plus, la paroi du corps étant d'épaisseur constante, cela permet une meilleure stabilité de la prolonge en compression en cas de choc frontal.

En outre, l'emploi de nervures extérieures permet de renforcer la résistance de la prolonge au flambage et à la flexion, ainsi qu'une adaptation facile de ses caractéristiques d'absorption d'énergie.

Enfin, les matériaux composites ou thermoplastiques employés permettent d'obtenir une structure légère qui évitera d'alourdir le véhicule sur lequel les prolonges sont montées et, les prolonges étant d'un seul tenant, le nombre de pièces nécessaires lors de l'assemblage du véhicule s'en trouve réduit.

## Revendications

1. Ensemble structurel avant (1) de véhicule automobile comportant une poutre pare-chocs (7) transversale de voie basse et des prolonges (9,10) longitudinales pour relier la poutre pare-chocs (7) à la caisse du véhicule automobile, les prolonges (9,10) comportant chacune :
- un corps (12) allongé comportant une face extérieure (24) ;
- des nervures de renfort (14, 15) entrecroisées s'étendant sur la face extérieure (24) du corps (12), les nervures (14, 15) étant venues de matière avec le corps (12) ; et
- au moins une embase de fixation (17, 18), située à une extrémité du corps (12), l'embase de fixation (17, 18) étant venue de matière avec le corps (12) ;
**caractérisé en ce que** le corps (12) de chaque prolonge (9, 10) est tubulaire et comporte au moins un évidement (20, 42) traversant le corps (12) et débouchant à ses extrémités longitudinales.

2. Ensemble structurel avant de véhicule automobile selon la revendication 1, **caractérisé en ce qu'**au moins une nervure (14) s'étend longitudinalement le long du corps.

3. Ensemble structurel avant de véhicule automobile selon l'une quelconque des revendications 1 ou 2, **caractérisé en ce qu'**au moins une nervure (15) s'étend transversalement.

4. Ensemble structurel avant de véhicule automobile selon l'une quelconque des revendications précédentes, **caractérisé en ce que** les prolonges sont en matériau plastique ou composite.

5. Ensemble structurel avant de véhicule automobile selon l'une quelconque des revendications précédentes, **caractérisé en ce que** chaque prolonge (9, 10) est monobloc.

6. Ensemble structurel avant de véhicule automobile selon la revendication 5, **caractérisé en ce que** le corps (12) de chaque prolonge (9, 10) est formé de deux tronçons tubulaires tronconiques (46, 47) convergeant l'un vers l'autre.

7. Ensemble structurel avant de véhicule automobile selon l'une quelconque des revendications 1 à 4, **caractérisé en ce que** chaque prolonge (9, 10) est constituée de deux demi-coques (50, 51) allongées de forme générale semi-cylindrique.

8. Ensemble structurel avant de véhicule automobile selon la revendication 7, **caractérisée en ce que** les demi-coques (50, 51) sont liées continument l'une à l'autre par un pont de matière faisant charnière.

9. Ensemble structurel avant de véhicule automobile selon l'une quelconque des revendications précédentes, **caractérisé en ce que** la ou chaque embase (17, 18) est nervurée.

10. Ensemble structurel avant de véhicule automobile selon l'une quelconque des revendications précédentes, **caractérisé en ce qu'**il comprend un berceau (5), notamment un berceau moteur destiné à être fixé sur la caisse d'un véhicule automobile, les prolonges (9, 10) définissant des prolonges de berceau.

11. Procédé de fabrication d'une prolonge (10) de berceau pour un ensemble structurel avant de véhicule automobile selon l'une quelconque des revendications 1 à 10, **caractérisé en ce qu'**un matériau composite ou plastique est injecté dans un moule (100) de façon à former la prolonge (10).

12. Procédé de fabrication selon la revendication 11, **caractérisé en ce que** des noyaux (104, 105), notamment tronconiques, sont introduits dans le moule (100) avant injection du matériau constitutif de la prolonge (10), de façon à former l'évidement central (20) de la prolonge (10).

13. Procédé de fabrication selon la revendication 11, **caractérisé en ce qu'**un fluide liquide est injecté dans le moule (100) pendant l'injection du matériau constitutif de la prolonge (10), de façon à former le ou chaque évidement (20, 42) de la prolonge (10).

## Patentansprüche

1. Vorderstruktureinrichtung (1) für ein Kraftfahrzeug, mit einer querverlaufenden Niedrigbahn-Stoßstange (7) und longitudinalen Fortsätzen (9, 10) zum Verbinden der Stoßstange (7) mit der Karosserie des Kraftfahrzeugs, wobei die Fortsätze (9, 10) jeweils aufweisen:
- einen langgestreckten Körper (12) mit einer Außenfläche (24),
- gitterartige Verstärkungsrippen (14, 15), die sich auf der Außenfläche (24) des Körpers (12) erstrecken, wobei die Rippen (14, 15) aus einem Stück sind mit dem Körper (12), und
- wenigstens einen Befestigungssockel (17, 18), der an einem Ende des Körpers (12) angeordnet ist, wobei der Befestigungssockel (17, 18) aus einem Stück ist mit dem Körper (12),
**dadurch gekennzeichnet, dass** der Körper (12) von jedem Fortsatz (9, 10) rohrförmig ist und wenigstens eine Aussparung (20, 42) hat, die den Körper (12) durchdringt und die an seinen Längsenden ausmündet.

2. Vorderstruktureinrichtung für ein Kraftfahrzeug gemäß Anspruch 1, **dadurch gekennzeichnet, dass** wenigstens eine Rippe (14) sich längs entlang des Körpers erstreckt.

3. Vorderstruktureinrichtung für ein Kraftfahrzeug gemäß einem der Ansprüche 1 oder 2, **dadurch gekennzeichnet, dass** wenigstens eine Rippe (15) sich quer erstreckt.

4. Vorderstruktureinrichtung für ein Kraftfahrzeug gemäß irgendeinem der vorhergehenden Ansprüche, **dadurch gekennzeichnet, dass** die Fortsätze aus Kunststoff- oder Verbundmaterial sind.

5. Vorderstruktureinrichtung für ein Kraftfahrzeug gemäß einem der vorhergehenden Ansprüche, **dadurch gekennzeichnet, dass** jeder Fortsatz (9, 10) aus einem Stück ist.

6. Vorderstruktureinrichtung für ein Kraftfahrzeug gemäß Anspruch 5, **dadurch gekennzeichnet, dass** der Körper (12) jedes Fortsatzes (9, 10) von zwei kegelstumpfförmigen Rohrabschnitten (46, 47) gebildet ist, die zueinander hin konvergieren.

7. Vorderstruktureinrichtung für ein Kraftfahrzeug gemäß irgendeinem der Ansprüche 1 bis 4, **dadurch gekennzeichnet, dass** jeder Fortsatz (9, 10) von zwei langgestreckten Halbschalen (50, 51) von im Allgemeinen halbzylindrischer Form gebildet ist.

8. Vorderstruktureinrichtung für ein Kraftfahrzeug gemäß Anspruch 7, **dadurch gekennzeichnet, dass** die Halbschalen (50, 51) kontinuierlich miteinander verbunden sind über eine ein Scharnier bildende Stoffbrücke.

9. Vorderstruktureinrichtung für ein Kraftfahrzeug gemäß einem der vorhergehenden Ansprüche, **dadurch gekennzeichnet, dass** der oder jeder Sockel (17, 18) gerippt ist.

10. Vorderstruktureinrichtung für ein Kraftfahrzeug gemäß einem der vorhergehenden Ansprüche, **dadurch gekennzeichnet, dass** sie aufweist einen Träger (5), insbesondere einen Motorträger, der dazu bestimmt ist, an der Karosserie eines Kraftfahrzeugs befestigt zu werden, wobei die Fortsätze (9, 10) Fortsätze des Trägers definieren.

11. Verfahren zur Herstellung eines Träger-Fortsatzes (10) für eine Vorderstruktureinrichtung für ein Kraftfahrzeug gemäß einem der Ansprüche 1 bis 10, **dadurch gekennzeichnet, dass** ein Verbund- oder Kunststoffmaterial in eine Form (100) eingespritzt wird, um den Fortsatz (10) zu formen.

12. Verfahren zur Herstellung gemäß Anspruch 11, **dadurch gekennzeichnet, dass** Kerne (104, 105), insbesondere kegelstumpfförmige, in die Form (100) eingebracht werden vor dem Einspritzen des den Fortsatz (10) bildenden Materials, um die zentrale Aussparung (20) des Fortsatzes (10) zu bilden.

13. Verfahren zur Herstellung gemäß Anspruch 11, **dadurch gekennzeichnet, dass** ein Flüssigkeitsfluid in die Form (100) eingespritzt wird während der Einspritzung des den Fortsatz (10) bildenden Materials, um die oder jede Aussparung (20, 42) des Fortsatzes (10) zu bilden.

## Claims

1. Front structural assembly (1) of a motor vehicle including a lower section transverse bumper beam (7) and longitudinal extensions (9, 10) to connect the bumper beam (7) to the bodywork of the motor vehicle, the extensions (9, 10) each including:
- a lengthened body (12) including an external face (24);
- interlaced reinforcement ribs (14, 15) extending on the external face (24) of the body (12), the ribs (14, 15) being integral with the body (12); and
- at least one fixing base (17, 18) situated at one end of the body (12), the fixing base (17, 18) being integral with the body (12);
**characterised in that** the body (12) of each extension (9, 10) is tubular and includes at least one recess (20, 42) crossing the body (12) and emerging at its longitudinal ends.

2. Front structural assembly of a motor vehicle according to claim 1, **characterised in that** at least one rib (14) extends longitudinally along the body.

3. Front structural assembly of a motor vehicle according to one of claims 1 or 2, **characterised in that** at least one rib (15) extends transversally.

4. Front structural assembly of a motor vehicle according to one of the preceding claims, **characterised in that** the extensions are made of plastic or composite material.

5. Front structural assembly of a motor vehicle according to one of the preceding claims, **characterised in that** each extension (9, 10) is monobloc.

6. Front structural assembly of a motor vehicle according to claim 5, **characterised in that** the body (12) of each extension (9, 10) is formed of two truncated tubular sections (46, 47) converging towards one another.

7. Front structural assembly of a motor vehicle according to one of claims 1 to 4, **characterised in that** each extension (9, 10) consists of two lengthened half-shells of a generally semi-cylindrical shape (50, 51).

8. Front structural assembly of a motor vehicle according to claim 7, **characterised in that** the half-shells (50, 51) are linked continuously to one another by a material bridge making a hinge.

9. Front structural assembly of a motor vehicle according to one of the preceding claims, **characterised in that** the or each base (17, 18) is ribbed.

10. Front structural assembly of a motor vehicle according to one of the preceding claims, **characterised in that** it comprises a mounting (5), particularly an engine mounting intended to be fixed on the bodywork of a motor vehicle, the extensions (9, 10) defining mounting extensions.

11. Method for the production of a mounting extension (10) for a front structural assembly of a motor vehicle according to one of claims 1 to 10, **characterised in that** a composite or plastic material is injected into a mould (100) in order to form the extension (10).

12. Production method according to claim 11, **characterised in that** cores (104, 105), particularly truncated, are introduced into the mould (100) before injection of the material constituting the extension (10) in order to form the central recess (20) of the extension (10).

13. Production method according to claim 11, **characterised in that** a liquid fluid is injected into the mould (100) during injection of the material constituting the extension (10) in order to form the or each recess (20, 42) of the extension (10).
